# FASCICULE DE BREVET EUROPEEN

(11) **EP 1 027 643 B1**
(45) Date de publication et mention de la délivrance du brevet: **22.12.2004**
(21) Numéro de dépôt: 98951538.2
(22) Date de dépôt: 23.10.1998
(51) Int. Cl.: G06F 9/32

(54) **MICROPROCESSEUR PIPELINE A SAUT CONDITIONNEL EN UN CYCLE D'HORLOGE**
PIPELINEMIKROPROZESSOR MIT VERARBEITUNG VON BEDINGTEN VERZWEIGUNGUNGEN IN EINEM EINZIGEN TAKTZYKLUS
PIPELINE MICROPROCESSOR WITH CONDITIONAL JUMP IN A CLOCK CYCLE

(30) Priorité: 03.11.1997 FR 9713757
(43) Date de publication de la demande: 16.08.2000
(73) Titulaire: Inside Contactless, 13856 Aix en Provence Cedex 3 (FR)
(72) Inventeur: BOUYOUX, Eric, F-13320 Bouc Bel Air (FR)
(74) Mandataire: Marchand, André
(86) Numéro de dépôt international: PCT/FR1998/002265
(87) Numéro de publication internationale: WO 1999/023551

(56) Documents cités:
- EP-A- 0 378 816
- US-A- 5 349 671
- US-A- 5 485 629
- US-A- 5 617 574
- PARKER AND VENESKI: "Control structure for making fast conditional branch decisions" IBM TECHNICAL DISCLOSURE BULLETIN, vol. 27, no. 2, juillet 1984, pages 1239-1240, XP002070445 ARMONK,US
- MONTANARO J ET AL: "A 160-MHZ, 32-B, 0.5-W CMOS RISC MICROPROCESSOR" IEEE JOURNAL OF SOLID-STATE CIRCUITS, vol. 31, no. 11, novembre 1996, pages 1703-1714, XP000691455
- JOUPPI N P: "THE NONUNIFORM DISTRIBUTION OF INSTRUCTION-LEVEL AND MACHINE PARALLELISM AND ITS EFFECT ON PERFORMANCE" IEEE TRANSACTIONS ON COMPUTERS, vol. 38, no. 12, 1 décembre 1989, pages 1645-1658, XP000096380

## Description

La présente invention concerne un microprocesseur du type pipeline comprenant un compteur ordinal, un circuit d'incrémentation du compteur ordinal, des moyens de décodage d'un jeu d'instructions du microprocesseur comprenant des moyens de décodage d'une instruction de saut conditionnel du compteur ordinal, et une unité de calcul comportant une première sortie pour délivrer un résultat et une deuxième sortie pour délivrer des bits d'état du résultat.

La présente invention concerne également l'exécution d'une instruction de saut conditionnel dans un microprocesseur pipeline du type ci-dessus.

Par "instruction de saut conditionnel", on désigne dans la présente demande une instruction JMPc de saut du compteur ordinal PC ("program counter") d'un microprocesseur, dont l'exécution dépend du résultat d'une instruction précédente. Par exemple, les instructions suivantes sont des sauts conditionnels :
1) JMPc IF C=0 VAL (saut de valeur VAL si C=0),
2) JMPc IF N=0 VAL (saut de valeur VAL si N=0),
3) JMPc IF P=0 VAL (saut de valeur VAL si P=0),
4) JMPc IF Z=0 VAL (saut de valeur VAL si Z=0),
le bit C ("carry") étant le bit de report de somme (ou de débordement), le bit N le bit de signe, le bit P le bit de parité et le bit Z le bit de valeur nulle du résultat d'une opération réalisée par une unité de calcul arithmétique et logique ALU. Ces bits C, N, P, Z, ou drapeaux ("flags"), sont stockés classiquement dans un registre désigné Rf ("flags register").

Dans l'art antérieur, une instruction de saut conditionnel ne peut être exécutée avant que le résultat de l'instruction précédente soit connu et que le registre Rf contenant les drapeaux soit mis à jour. Cette nécessité est en contradiction avec le fait que, dans un microprocesseur pipeline, les étapes de traitement de deux instructions successives se chevauchent avec un décalage d'un rang. On considérera à titre d'exemple la séquence de programme suivante :
(1) (ADR₁) **SUB R1,R2,R3**
(2) (ADR₂) **JMPc IF Z=1 VAL,**
qui signifie :
(1) "soustraire le contenu d'un registre R3 au contenu d'un registre R2, et enregistrer le résultat dans un registre R3",
(2) "saut du programme à l'adresse ADR₂ + VAL si résultat nul, sinon aller à l'adresse immédiatement suivante ADR₃ du programme",
et implique les étapes de traitement décrites ci-après, chaque étape étant réalisée en un cycle d'horloge :
**1.1** - lecture de l'instruction SUB à l'adresse ADR₁ de la mémoire programme du microprocesseur, et incrémentation du compteur ordinal PC (ADR₁ devient ADR₂),
**1.2**- décodage de l'instruction SUB,
**1.3** - lecture des registres R2 et R3,
**1.4** - soustraction par l'unité ALU du contenu du registre R3 au contenu du registre R2,
**1.5** - enregistrement du résultat de la soustraction dans le registre R1 et enregistrement dans le registre Rf des drapeaux C,N,P,Z délivrés par l'unité ALU,
**2.1** - lecture de l'instruction JMPc à l'adresse ADR₂ et incrémentation normale du compteur ordinal (ADR₂ devient ADR₃),
**2.2** - décodage de l'instruction JMPc,
**2.3** - lecture du drapeau Z dans le registre Rf ; si Z=1, calcul de l'adresse ADR₂ + VAL et chargement de cette adresse dans le compteur ordinal PC.

Dans une chaîne de traitement pipeline, les étapes 1.x et 2.x ci-dessus devraient être traitées simultanément avec un décalage d'un rang. Toutefois, on voit que l'étape 2.3 ne peut chevaucher l'étape 1.4 car le résultat de l'opération précédente n'est pas encore disponible dans le registre Rf. Egalement, une nouvelle instruction suivant l'instruction JMPc ne peut être lue avant que l'étape 2.3 de l'instruction JMPc ne soit terminée car l'on ne sait pas encore à quelle adresse cette instruction doit être lue.

Ainsi, la solution classique pour pallier cet inconvénient consiste à suspendre l'injection d'une nouvelle instruction dans la chaîne pipeline jusqu'à ce que les drapeaux C, N, P, Z soient chargés dans le registre Rf (étape 1.5) et que l'instruction de saut conditionnel soit traitée (étape 2.3).

Cette méthode présente l'inconvénient de bloquer temporairement le fonctionnement de la chaîne pipeline et de ralentir l'exécution d'un programme. De façon générale, le temps perdu pour l'exécution d'un programme est proportionnel au nombre de sauts conditionnels que contient le programme.

La présente invention a pour principal objectif de prévoir une structure de microprocesseur pipeline permettant d'exécuter une instruction de saut conditionnel sans interruption de la chaîne de traitement pipeline.

Le document US 5,349,671 décrit en relation avec ses figures 1 à 4 un microprocesseur comprenant 4 étages pipelines, respectivement de lecture d'une instruction, de décodage de l'instruction, d'exécution de l'instruction et de stockage du résultat, ainsi que des moyens de décodage [3a, 3b] et d'exécution [6a, 6b] d'une instruction de saut conditionnel. Les moyens de décodage [3a, 3b] sont connectés à la fois au registre d'état [2] du microprocesseur et à la sortie de l'unité de calcul ALU [4] qui délivre les drapeaux du microprocesseur. Plus particulièrement, ces moyens de décodage comprennent un premier circuit [3a] d'évaluation d'une adresse de branchement, connecté au registre d'état [2], un deuxième circuit [3b] d'évaluation d'une adresse de branchement, connecté à la sortie susmentionnée de l'unité ALU, et un détecteur [1] de mise à jour de drapeau sont la sortie indique si l'instruction en cours d'exécution est susceptible ou non de modifier les drapeaux du microprocesseur. Lorsqu'une instruction de saut conditionnel est décodée, le choix de l'adresse de lecture de l'instruction suivante est confié au premier [3a] ou au second [3b] circuit d'évaluation selon l'indication donnée par le détecteur [1] de mise à jour de drapeau.

La présente invention vise une alternative à cette structure classique de microprocesseur pipeline, et vise notamment des moyens de décodage et de traitement d'une instruction de saut conditionnel qui soient plus simples que ceux décrits ci-dessus.

Un objectif secondaire de la présente invention est de prévoir une structure de microprocesseur pipeline qui soit simple et consomme peu de courant.

Pour atteindre ces objectifs, la présente invention prévoit un microprocesseur du type cité ci-dessus dans lequel l'unité de calcul et les moyens de décodage de l'instruction de saut conditionnel sont agencés dans deux étages pipeline voisins, et les moyens de décodage de l'instruction de saut conditionnel sont connectés à la deuxième sortie de l'unité de calcul.

Selon un mode de réalisation, le microprocesseur comprend un premier et un deuxième étages pipeline comprenant chacun un premier et un deuxième secteurs, le premier secteur de chaque étage étant actif pendant un premier demi-cycle d'horloge et le deuxième secteur de chaque étage actif pendant un deuxième demi-cycle d'horloge.

Selon un mode de réalisation, les moyens de décodage de l'instruction de saut conditionnel sont agencés dans le premier secteur du premier étage pipeline, l'unité de calcul est agencée dans le premier secteur du deuxième étage pipeline.

Selon un mode de réalisation, les moyens de décodage de l'instruction de saut conditionnel sont agencés dans le deuxième secteur du premier étage pipeline, l'unité de calcul est agencée dans le premier secteur du deuxième étage pipeline.

Selon un mode de réalisation, le circuit d'incrémentation du compteur ordinal est agencé dans le deuxième secteur du premier étage pipeline.

Avantageusement, le microprocesseur comprend une banque de registres appartenant en lecture au premier secteur et en écriture au deuxième secteur du deuxième étage pipeline. Cette caractéristique permet de simplifier la structure du microprocesseur qui peut ne comprendre que deux étages pipeline, au bénéfice de la consommation électrique, et exécuter des instructions compactes comprenant uniquement un code opération, l'adresse d'un registre source et l'adresse d'un registre de destination du résultat de l'opération désignée par l'instruction.

Selon un mode de réalisation, les secteurs du deuxième étage pipeline sont délimités par un tampon à trois états agencé entre les première et deuxième sorties de l'unité de calcul et des entrées d'écriture de la banque de registre.

Selon un mode de réalisation, l'instruction de saut conditionnel est une instruction de saut relatif, les moyens d'incrémentation du compteur ordinal comprennent un circuit additionneur recevant en entrée la valeur actuelle du compteur ordinal et la sortie d'un circuit multiplexeur, le circuit multiplexeur est piloté par les moyens de décodage de l'instruction de saut conditionnel et reçoit en entrée une valeur d'incrémentation normale du compteur ordinal et une valeur de saut relatif du compteur ordinal, contenue dans l'instruction de saut conditionnel.

Selon un mode de réalisation, l'instruction de saut conditionnel est une instruction de saut absolu, les moyens d'incrémentation du compteur ordinal comprennent un circuit multiplexeur recevant en entrée la sortie d'un circuit additionneur et une valeur de saut absolu du compteur ordinal contenue dans l'instruction de saut conditionnel, le circuit multiplexeur est piloté par les moyens de décodage de l'instruction de saut conditionnel, et le circuit additionneur reçoit en entrée la valeur actuelle du compteur ordinal et une valeur d'incrémentation normale du compteur ordinal.

Selon un mode de réalisation, les moyens de décodage sont agencés pour décoder une instruction compacte de saut conditionnel comprenant un code opération, une condition et une valeur de saut.

Ces caractéristiques et avantages de la présente invention seront exposés plus en détail dans la description suivante de deux exemples de réalisation d'un microprocesseur selon l'invention, faite à titre non limitatif en relation avec les figures jointes parmi lesquelles :
- la figure 1 est le schéma électrique d'un premier mode de réalisation d'un microprocesseur selon l'invention, et
- la figure 2 représente une variante de réalisation du microprocesseur de la figure 1.

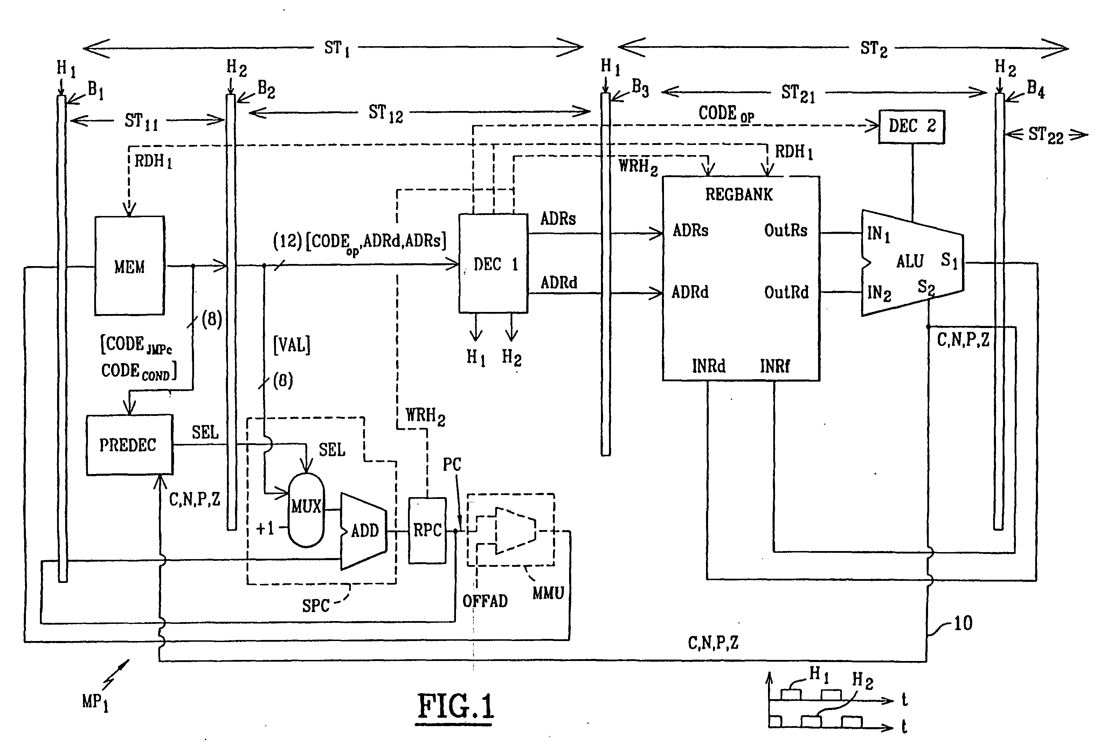

La figure 1 représente un microprocesseur pipeline MP1 selon l'invention. Le microprocesseur est agencé pour exécuter des instructions compactes se présentant sous le format suivant :

| | | | |
|---|---|---|---|
| CODE_{OP} | ADRd | ADRs | - |

Ces instructions, codées ici sur 16 bits, comprennent un champ CODE_{OP} codé sur 4 bits, donnant l'opération OP à exécuter par l'unité ALU, un champ ADRd de 4 bits donnant l'adresse d'un registre Rd de destination du résultat, et un champ ADRs de 4 bits donnant l'adresse d'un registre source Rs. Le dernier champ, de 4 bits, n'est pas utilisé ici. De façon classique, l'opération OP est par exemple l'addition ADD (additionner Rs à Rd et stocker le résultat dans Rd), la soustraction SUB (soustraire Rs à Rd et stocker le résultat dans Rd), le OU logique (stocker dans R1 le résultat de R1 OU R2 calculé bit à bit), le ET logique, etc..

Le microprocesseur est également agencé pour exécuter une instruction compacte de saut conditionnel JMPc, qui se présente par exemple sous le format suivant :

| | | |
|---|---|---|
| CODE_{JMPc} | CODE_{COND} | VAL |

Cette instruction comprend le code opération CODE_{JMPc} de l'instruction, sur 4 bits, le code CODE_{COND} de la condition du saut COND, sur 4 bits, et la valeur de saut VAL, sur 8 bits. Comme expliqué au préambule, la condition de saut COND est en rapport avec la valeur d'un bit d'état G, N, P, ou Z, et peut par exemple être : IF Z=0, IF Z=1, IF C=0, IF C=1, etc..

Par ailleurs, le microprocesseur comprend les éléments suivants : une banque de registre REGBANK ; une unité de calcul arithmétique et logique ALU ; un compteur ordinal PC pour donner l'adresse de lecture, dans une mémoire programme MEM, des instructions à traiter ; un circuit SPC d'incrémentation, à chaque nouvelle instruction reçue, du compteur ordinal PC ; des moyens DEC1, DEC2, PREDEC de décodage d'un jeu d'instructions du microprocesseur.

L'unité ALU, représentée sous forme de bloc, comprend des circuits classiques de traitement de données nécessaires à l'exécution d'instructions de type arithmétique et logique, et peut notamment comprendre un registre à décalage de bits. L'unité ALU présente ici deux entrées IN1, IN2, une sortie de résultat S1 et une sortie S2 délivrant les bits d'état C, N, P, Z du résultat.

La banque de registres REGBANK contient divers registres de travail, par exemple seize registres R1 à R16 (non représentés), et des registres hardware parmi lesquels se trouve un registre Rf contenant les bits d'état C, N, P, Z. La banque REGBANK comporte une entrée ADRs pour recevoir l'adresse du registre source Rs, une entrée ADRd pour recevoir l'adresse du registre de destination Rd, une sortie OUTRs de lecture du registre source Rs, une sortie OUTRd de lecture du registre de destination Rd, une entrée INRd pour l'écriture d'un résultat dans le registre de destination Rd, et une entrée INRf pour écrire dans le registre Rf les bits d'état C, N, P, Z d'un résultat.

Les moyens de décodage DEC1, DEC2, PREDEC comprennent un décodeur principal DEC1, un décodeur DEC2 pour piloter l'unité ALU, et un décodeur PREDEC de l'instruction de saut conditionnel JMPc.

Selon l'invention, le chemin de données du microprocesseur est divisé en deux étages pipeline ST1, ST2 contigus délimités par des registres B1, B3. Ces registres B1, B3, par exemple des registres à verrouillage (ou "latch"), sont déclenchés par le passage à 1 d'un signal d'horloge H1. Par ailleurs, les deux étages ST1 ST2 sont divisés chacun en deux secteurs ST11/ST12, ST21/ST22 au moyen d'un registre B2 agencé entre les registres B1, B3 et d'un registre B4 disposé après le registre B3 selon le sens de circulation des données. Le registre B2 est par exemple un registre à verrouillage déclenché par le passage à 1 d'un signal H2 déphasé de 180° relativement au signal H1. Le registre B4 est de préférence un registre tampon trois états ("buffer tristate") transparent quand le signal H2 est à 1 et dans l'état haute impédance quand H2 est à 0.

Ainsi, le signal d'horloge H1 synchronise le transfert des données de l'étage ST1 vers l'étage ST2, et le signal H2 synchronise le transfert des données du premier secteur ST11, ST21 vers le deuxième secteur ST12, ST22 de chaque étage ST1, ST2. Pour fixer les idées, les signaux d'horloge H1 et de transfert H2 sont représentés au bas de la figure 1.

Selon l'invention, l'unité ALU est agencée dans le secteur ST21 de l'étage pipeline ST2 et le décodeur PREDEC agencé dans le secteur ST11 de l'étage ST1. La sortie S2 de l'unité ALU, qui délivre les bits C, N, P, Z, est appliquée par l'intermédiaire d'un bus 10 au décodeur PREDEC. Comme on le verra par la suite, cette connexion du décodeur PREDEC à la sortie de l'unité ALU délivrant les bits C, N, P, Z, permet de traiter immédiatement l'instruction de saut conditionnel, sans attendre que ces bits soient chargés dans le registre Rf. Le décodeur PREDEC reçoit les 8 premiers bits des instructions présentes à la sortie de la mémoire MEM. Dans le cas de l'instruction JMPc, ces huit premiers bits comprennent le code opération CODE_{JMPc} et le code condition CODE_{COND}.

Par ailleurs, les sorties OUTRs et OUTRd de la banque REGBANK sont appliquées sur les entrées IN1 et IN2 de l'unité ALU, respectivement. Les sorties S1 et S2 de l'unité ALU sont renvoyées par l'intermédiaire du registre B4 sur les entrées INRd et INRf de la banque REGBANK, respectivement. Le décodeur DEC1, disposé dans le secteur ST12, reçoit au moins les 12 premiers bits des instructions, c'est-à-dire les champs CODE_{OP}, ADRd et ADRs, par l'intermédiaire du registre B2. Les adresses ADRs, ADRd sont transférées sur les entrées correspondantes de la banque REGBANK par l'intermédiaire du registre B3.

La banque REGBANK est commandée en lecture par un signal RDH1 et en écriture par un signal WRH2, ces signaux étant émis par le décodeur DEC1. Le signal de lecture RDH1 est émis quand le signal d'horloge H1 est à 1 et le signal d'écriture WRH2 est émis quand le signal H2 est à 1. La banque REGBANK appartient ainsi, en lecture, au premier secteur ST21 de l'étage ST2 et, en écriture, au deuxième secteur ST22 de l'étage ST2. Par ailleurs, le décodeur DEC2, agencé dans le secteur ST21, reçoit du décodeur DEC1 les codes CODE_{OP} des opérations que doit réaliser l'unité ALU.

Ici, le compteur ordinal PC est réalisé au moyen d'un registre tampon RPC transparent sur réception du signal d'écriture WRH2. A chaque cycle d'horloge, le tampon RPC reçoit du circuit SPC une nouvelle valeur d'adresse, ou adresse PC. Après application du signal WRH2, l'adresse PC se retrouve à la sortie du tampon RPC et est renvoyée sur l'entrée d'adresse de la mémoire MEM par l'intermédiaire du registre B1. La mémoire MEM délivre en sortie l'instruction contenue à l'adresse PC, sur réception du signal de lecture RDH1 (dans un souci de cohérence du schéma de la figure 1, la mémoire MEM est représentée dans le secteur ST11, bien qu'étant un élément périphérique du microprocesseur). De façon optionnelle, l'adresse PC peut être appliquée à la mémoire MEM par l'intermédiaire d'un convertisseur MMU ("Memory Management Unit") représenté en traits pointillés sur la figure. Le convertisseur MMU reçoit sur une entrée une adresse offset OFFAD et convertit l'adresse PC par addition (comme représenté sur la figure) ou par concaténation de l'adresse OFFAD avec l'adresse PC.

Enfin, le circuit SPC comprend un multiplexeur MUX recevant sur une première entrée une valeur d'incrémentation normale du compteur ordinal, ici la valeur +1, et sur une deuxième entrée les huit derniers bits de l'instruction présente à la sortie de la mémoire MEM, par l'intermédiaire du registre B2. Selon le format des instructions décrit ci-dessus, ces huit derniers bits correspondent à la zone VAL de l'instruction JMPc. La sortie du multiplexeur MUX est appliquée sur une entrée d'un additionneur ADD dont la sortie est appliquée en entrée du tampon SPC. L'adresse PC à la sortie du tampon SPC est renvoyée par l'intermédiaire du registre B1 sur la deuxième entrée de l'additionneur ADD.

Pour illustrer le fonctionnement du microprocesseur de l'invention, on se référera par exemple à la séquence de programme suivante :
(1) (ADR₁) **SUB R1,R2**
(2) (ADR₂) **JMPc IF Z=1 VAL**

Ces instructions sont délivrées par la mémoire MEM sous la forme suivante :

| | | | |
|---|---|---|---|
| CODE_{SUB} | ADR1 | ADR2 | - |

| | | |
|---|---|---|
| CODE_{JMPc} | CODE_{IF z=1} | VAL |

La séquence est exécutée par le microprocesseur selon des étapes 1.1 à 2.2 décrites ci-après. Les diverses opérations réalisées au cours de chaque étape se déroulent de façon asynchrone en fonction du flot de données traversant les éléments du microprocesseur, et sont considérées comme achevées à la fin de chaque étape.
**1.1** - H1 = 1, H2 = 0, registre B1 déclenché, secteur ST11 actif :
   - l'adresse PC (ici ADR₁) est appliquée à l'entrée de l'additionneur ADD et de la mémoire MEM,
   - la mémoire MEM reçoit le signal de lecture RDH1 et délivre l'instruction **SUB R1, R2,**
   - le décodeur PREDEC reçoit le code CODE_{SUB} et met le signal SEL à 0 car le code CODE_{JMPc} n'est pas reconnu.
**1.2** - H1 = 0, H2 = 1, registre B2 déclenché, secteur ST12 actif :
   - le décodeur DEC1 reçoit l'instruction, envoie les adresses ADR1 et ADR2 en direction de la banque REGBANK et le code opération CODE_{SUB} en direction du décodeur DEC2 (ces données sont interceptées et bloquées par le registre B3),
   - le multiplexeur MUX reçoit le signal SEL (à 0), sélectionne l'entrée "+1", de sorte que la sortie de l'additionneur ADD délivre la valeur ADD₁+1, soit ADD₂,
   - le registre RPC reçoit le signal d'écriture WRH2 et l'adresse PC (anciennement ADD₁) devient ADD₂.
**1.3** - H1 = 1, H2 = 0, registre B3 déclenché, secteur ST21 actif :
   - la banque REGBANK reçoit les adresses ADR1, ADR2 et le signal de lecture RDH1, et délivre le contenu des registres R1, R2 à l'unité ALU,
   - l'unité ALU effectue la soustraction, délivre le résultat (R1-R2) sur la sortie S1, et les bits C, N, P, Z sur la sortie S2. Les bits C, N, P, Z sont appliqués au décodeur PREDEC via le bus 10.
**1.4** - H1 = 0, H2 = 1, registre B4 transparent, secteur ST22 actif :
   - les sorties S1, S2 de l'unité ALU sont connectées aux entrées INRd, INRf de la banque REGBANK. La banque reçoit le signal d'écriture WRH2. Le résultat de l'opération (R1-R2) est enregistré dans R1 et les bits C,N,P,Z présents à la sortie S2 de l'unité ALU sont enregistrés dans Rf.
**2.1** - H1 = 1, H2 = 0, registre B1 déclenché, secteur ST11 actif :
   - l'adresse PC (maintenant ADR₂) est appliquée en entrée de l'additionneur ADD et de la mémoire MEM,
   - la mémoire MEM reçoit le signal de lecture RDH1 et délivre l'instruction **JMPc IF Z=1 VAL,**
   - le décodeur PREDEC reçoit le code CODE_{JMPc}, le code condition CODE_{IF Z=1} et, via le bus 10, les bits C, N, P, Z délivrés par la sortie S2 de l'unité ALU (une période flottante intervient, l'unité ALU effectuant au même instant le calcul de l'opération SUB de l'étape 1.3 ci-dessus),
   - le décodeur PREDEC met le signal SEL à 1 si la condition Z = 1 est réalisée ou le met à 0 si Z = 0.
**2.2** - H1 = 0, H2 = 1, registre B2 déclenché, secteur ST12 actif :
   - le champ VAL (valeur du saut d'adresse) est transféré à l'entrée du multiplexeur MUX,
   - le multiplexeur MUX reçoit le signal SEL et sélectionne l'une de ses deux entrées. Si SEL = 1, la sortie de l'additionneur ADD délivre la valeur ADDₙ = ADD₂+VAL ; si SEL = 0 la sortie de l'additionneur ADD délivre la valeur ADD₃ = ADD₂+1,
   - le registre RPC reçoit le signal WRH2 et l'adresse PC devient égale à ADDₙ ou à ADD₃ selon la valeur du signal SEL.

Dans le microprocesseur pipeline selon l'invention, les étapes décrites ci-dessus se chevauchent comme résumé dans le tableau ci-après. On voit que la première étape 2.1 de l'instruction JMPc commence au même moment que l'étape 1.3 de l'instruction SUB, c'est-à-dire au deuxième cycle pipeline de cette instruction. On voit également que la première étape 3.1 de lecture d'une nouvelle instruction suivant l'instruction JMPc peut commencer après l'étape 2.2, l'instruction JMPc ayant été exécutée et l'adresse PC mise à jour en un seul cycle pipeline. A la fin de l'étape 2.2, l'adresse PC est en effet égale à ADDₙ ou à ADD₃ selon que la condition du saut a été réalisée ou non.

**Tableau**

| 1 cycle pipeline | | 1 cycle pipeline | | 1 cycle pipeline | |
|---|---|---|---|---|---|
| 1/2 cycle | 1/2 cycle | 1/2 cycle | 1/2 cycle | ½ cycle | 1/2 cycle |
| H1=1 | H2=1 | H1=1 | H2=1 | H1=1 | H1=1 |
| étape 1.1 | étape 1.2 | étape 1.3 | étape 1.4 | | |
| | | étape 2.1 | étape 2.2 | | |
| | | | | étape 3.1. | étape 3.2 |

En définitive, et très avantageusement, aucune interruption de la chaîne pipeline n'est nécessaire pour le traitement de l'instruction JMPc. De plus, la structure du microprocesseur selon l'invention, particulièrement simple, garantit une faible consommation de courant. Une mesure supplémentaire permettant de limiter la consommation électrique consiste à disposer sur les sorties OUTRs, OUTRd de la banque REGBANK des registres tampons pilotés par un signal H1' décalé d'une durée Δt relativement au signal H1. De cette manière, l'unité ALU n'est connectée aux sorties OUTRs, OUTRd qu'au moment ou celles-ci sont stabilisées. Le signal décalé H1' peut être obtenu simplement au moyen d'un circuit à retard, par exemple des portes inverseuses en cascade.

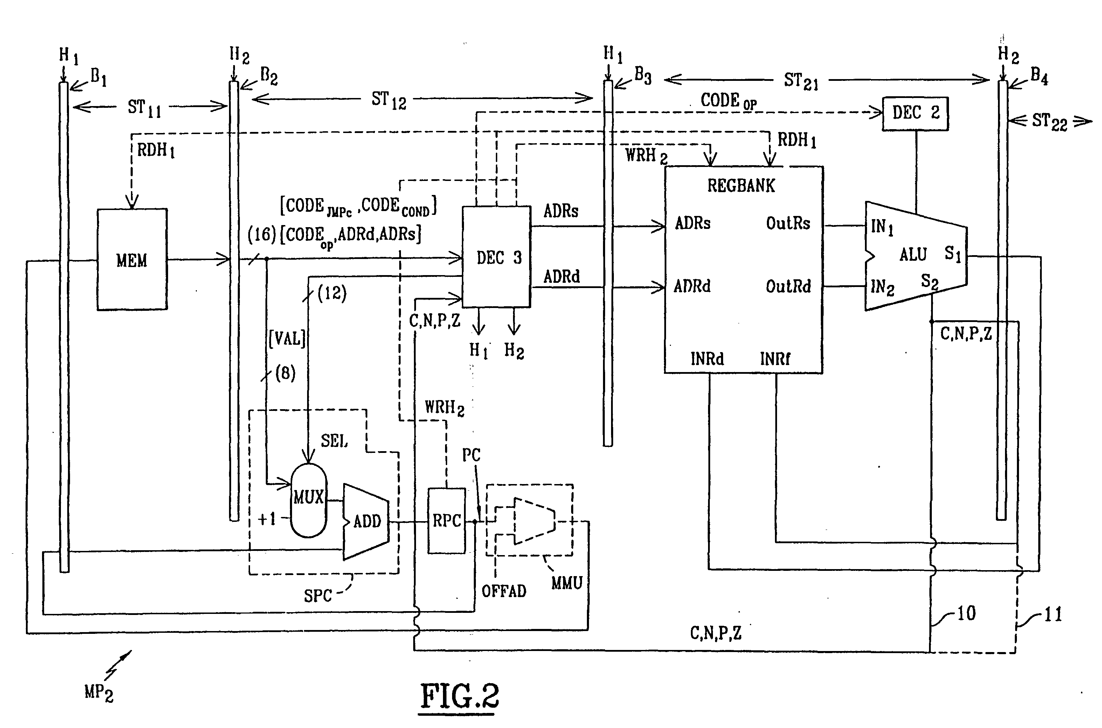

La figure 2 représente une variante MP2 du microprocesseur selon l'invention qui se distingue du mode de réalisation précédent par le fait que le décodage de l'instruction JMPc est confié à un décodeur DEC3 qui se trouve à l'emplacement du décodeur DEC1 précédemment décrit et réalise les opérations des décodeurs PREDEC et DEC1. Le décodeur DEC3 délivre notamment le signal SEL au cours de l'étape 2.2, en référence à la séquence décrite ci-dessus. Il convient de noter que le signal SEL peut être délivré rapidement par le décodeur DEC3 au cours de l'étape 2.2 étant donné que les bits C, N, P, Z sont validés à la fin de l'étape 2.1 (qui correspond à l'étape de calcul 1.3 de l'instruction précédente).

Dans cette variante de réalisation, on voit par ailleurs que les bits C, N, P, Z délivrés par l'unité ALU peuvent être appliqués au décodeur DEC3 par l'intermédiaire du registre B4, par exemple au moyen d'un bus 11 représenté en traits pointillés. Ainsi, lorsque l'on propose selon l'invention de connecter la sortie S2 de l'unité ALU aux moyens de décodage de l'instruction JMPc, cela ne signifie pas obligatoirement que la sortie de l'unité ALU est connectée directement au moyens de décodage. Cela signifie simplement que les bits C, N, P, Z sont prélevés à la sortie de l'unité ALU ou sur le bus qui les transporte vers le registre Rf au lieu d'être lus dans le registre Rf comme dans l'art antérieur.

Bien entendu, la présente invention est susceptible de nombreuses autres variantes de réalisation et perfectionnements. Dans ce qui précède, on a décrit un microprocesseur simplifié ne comportant que les éléments nécessaires à la description et la compréhension de l'invention. En pratique, le microprocesseur selon l'invention pourra comprendre divers autres moyens, par exemple des moyens de décodage d'instructions complexes, des moyens d'écriture de données dans la mémoire, etc.

Notamment, on a décrit dans ce qui précède un microprocesseur exécutant une instruction de saut "relatif" en additionnant une valeur VAL à l'adresse PC. Une variante consiste à réaliser une opération de saut "absolu" en inversant la disposition du multiplexeur MUX et de l'additionneur ADD (non représenté). Dans ce cas, l'additionneur ADD reçoit en entrée l'adresse PC et la valeur d'incrément +1. La sortie de l'additionneur ADD est appliquée sur une entrée du multiplexeur MUX qui reçoit toujours sur son autre entrée la valeur de saut VAL. La sortie du multiplexeur MUX est appliquée au registre RPC. Ainsi, selon cette variante, l'adresse PC est incrémentée de la valeur + 1 ou est portée à la valeur VAL selon que le signal SEL est à 1 ou à 0. La valeur VAL représente, dans ce cas, une adresse de saut absolu et non une valeur de saut relatif.

Par ailleurs, ces deux modes de réalisation du saut conditionnel absolu ou relatif peuvent être juxtaposés. Dans ce cas, l'agencement représenté en figures 1 et 2 est conservé mais un deuxième multiplexeur est interposé entre l'additionneur ADD et le tampon RPC (non représenté). Ce deuxième multiplexeur reçoit en entrée la sortie de l'additionneur ADD et le champ VAL. Sa sortie est appliquée au registre RPC et délivre PC+1, PC+VAL (saut relatif) ou VAL (saut absolu). Deux codes opérations distincts CODE_{JMPc-rel} et CODE_{JMPc-abs} sont prévus pour chaque type de saut conditionnel. Le décodeur PREDEC (fig. 1) ou DEC3 (fig. 2) est agencé pour faire la distinction entre chacun des codes opérations, et commande le multiplexeur MUX et le deuxième multiplexeur en fonction du code reçu.

Enfin, il apparaîtra clairement à l'homme de l'art que le fonctionnement des secteurs pipelines en demi-cycles d'horloge peut être obtenu de façon équivalente en prévoyant un signal d'horloge ayant une vitesse double, les secteurs pipeline n'étant activés qu'un cycle d'horloge sur deux en décalant d'un cycle d'horloge l'activation de chaque secteur relativement au secteur suivant. Pour chaque registre pipeline B1 à B4, la sélection d'un bit d'horloge sur deux comme signal de commande peut être faite de façon simple au moyen d'un circuit diviseur de fréquence, par exemple une bascule D dont la sortie /Q est ramenée sur l'entrée D. Les signaux de commandes des registres pipeline peuvent par ailleurs être combinés dans des portes OU Exclusif avant d'être appliqués, afin de garantir que deux secteurs complémentaires d'un même étage pipeline ne seront pas activés simultanément.

## Revendications

1. Microprocesseur pipeline (MP1, MP2) comprenant :
- un compteur ordinal (PC),
- des moyens (DEC1, DEC2, DEC3) de décodage d'un jeu d'instructions du microprocesseur,
- des moyens de décodage (Fig. 1 PREDEC, Fig. 2 DEC3) d'une instruction de saut conditionnel (JMPc) prévus pour délivrer un signal (SEL) de sélection d'adresse, agencés dans un premier étage pipeline (ST1) du microprocesseur et connectés à une deuxième sortie (S2) d'une unité de calcul (ALU),
- une unité de calcul (ALU) agencée dans un deuxième étage pipeline (ST2) voisin du premier étage (ST1), comportant une première sortie (S1) pour délivrer un résultat et une deuxième sortie (S2) pour délivrer des bits d'état (C, N, P, Z) du résultat,
- un circuit (SPC) d'incrémentation du compteur ordinal (PC), comprenant des moyens (MUX, ADD) pour délivrer, en fonction dudit signal de sélection d'adresse (SEL), une adresse de lecture d'une instruction immédiatement suivante ou une adresse de saut déterminée par le contenu (VAL) d'une instruction de saut conditionnel (JMPc),
**caractérisé en ce que** :
- les premier et deuxième étages pipeline comprennent chacun un premier secteur (ST11, ST21) et un deuxième secteur (ST12, ST22), le premier secteur de chaque étage étant actif pendant un premier demi-cycle d'horloge (H1) et le deuxième secteur actif pendant un deuxième demi-cycle d'horloge (H2),
- l'unité de calcul (ALU) est agencée dans le premier secteur (ST21) du deuxième étage pipeline (ST2),
- le circuit (SPC) d'incrémentation du compteur ordinal est agencé dans le deuxième secteur (ST12) du premier étage pipeline (ST1),
- le signal de sélection d'adresse (SEL) est appliqué au circuit (SPC) d'incrémentation du compteur ordinal pendant le deuxième demi-cycle d'horloge.

2. Microprocesseur (Fig.1 MP1) selon la revendication 1, dans lequel les moyens (PREDEC) de décodage de l'instruction de saut conditionnel sont agencés dans le premier secteur (ST11) du premier étage pipeline (ST1) , et le signal de sélection d'adresse (SEL) est appliqué au circuit (SPC) d'incrémentation du compteur ordinal par l'intermédiaire d'un registre à verrouillage (B2) séparant les deux secteurs (ST11, ST12) du premier étage pipeline **(ST1)**.

3. Microprocesseur (Fig. 2 MP2) selon la revendication 1, dans lequel les moyens (DEC3) de décodage de l'instruction de saut conditionnel sont agencés dans le deuxième secteur (ST12) du premier étage pipeline (ST1), et le signal de sélection d'adresse (SEL) délivré par les moyens (DEC3) de décodage de l'instruction de saut conditionnel est appliqué directement au circuit (SPC) d'incrémentation du compteur ordinal.

4. Microprocesseur selon l'une des revendications 1 à 3, dans lequel :
- l'instruction de saut conditionnel (JMPc) est une instruction de saut relatif,
- les moyens (SPC) d'incrémentation du compteur ordinal comprennent un circuit additionneur (ADD) recevant en entrée la valeur actuelle du compteur ordinal (PC) et la sortie d'un circuit multiplexeur (MUX),
- le circuit multiplexeur (MUX) est piloté par les moyens (PREDEC, DEC3) de décodage de l'instruction de saut conditionnel (JMPc) et reçoit en entrée une valeur d'incrémentation normale (+1) du compteur ordinal et une valeur de saut relatif (VAL) du compteur ordinal (PC), contenue dans l'instruction de saut conditionnel (JMPc).

5. Microprocesseur selon l'une des revendications 1 à 3, dans lequel :
- l'instruction de saut conditionnel (JMPc) est une instruction de saut absolu,
- les moyens (SPC) d'incrémentation du compteur ordinal comprennent un circuit multiplexeur (MUX) recevant en entrée la sortie d'un circuit additionneur (ADD) et une valeur (VAL) de saut absolu du compteur ordinal (PC) contenue dans l'instruction de saut conditionnel (JMPc),
- le circuit multiplexeur (MUX) est piloté par les moyens de décodage (PREDEC, DEC3) de l'instruction de saut conditionnel (JMPc), et
- le circuit additionneur (ADD) reçoit en entrée la valeur actuelle du compteur ordinal (PC) et une valeur d'incrémentation normale (+1) du compteur ordinal,

6. Microprocesseur selon l'une des revendications 1 à 5, dans lequel les moyens de décodage (PREDEC, DEC3) sont agencés pour décoder une instruction compacte de saut conditionnel (JMPc) comprenant un code opération (CODE_{JMPc}), une condition (COND) et une valeur de saut (VAL) .

7. Microprocesseur selon l'une des revendications 1 à 6, comprenant une banque de registres (REGBANK) appartenant en lecture au premier secteur (ST21) et en écriture au deuxième secteur (ST22) du deuxième étage pipeline (ST2).

8. Microprocesseur selon la revendication 7, dans lequel les secteurs (ST21, ST22) du deuxième étage pipeline (ST2) sont délimités par un tampon à trois états (B4) agencé entre les première (S1) et deuxième (S2) sorties de l'unité de calcul (ALU) et des entrées d'écriture (INRd, INRf) de la banque de registre (REGBANK).

## Patentansprüche

1. Pipeline-Mikroprozessor (MP1, MP2) umfassend:
- einen Programmschrittzähler (PC),
- Mittel (DEC1, DEC2, DEC3) zum Decodieren eines Anweisungssatzes des Mikroprozessors,
- Mittel zum Decodieren (Fig. 1 PREDEC, Fig. 2 DEC3) einer Anweisung eines bedingten Sprungs (JMPc), die vorgesehen sind, um ein Signal (SEL) zur Adressauswahl zu liefern, angeordnet in einer ersten Pipeline-Stufe (ST1) des Mikroprozessors und mit einem zweiten Ausgang (S2) einer Recheneinheit (ALU) verbunden,
- eine Recheneinheit (ALU), eingerichtet in einer zweiten Pipeline-Stufe (ST2) neben der ersten Stufe (ST1), die einen ersten Ausgang (S1) umfasst, um ein Ergebnis zu liefern, und einen zweiten Ausgang (S2), um Zustandbits (C, N, P, Z) des Ergebnisses zu liefern,
- eine Inkrementierungsschaltung (SPC) des Programmschrittzählers (PC), die Mittel (MUX, ADD) umfasst, um in Abhängigkeit von dem Adressauswahlsignal (SEL) eine Leseadresse für eine sofort darauf folgende Anweisung oder eine Sprungadresse, die durch den Inhalt (VAL) einer Anweisung für einen bedingten Sprung (JMPc) bestimmt wird, zu liefern,
**dadurch gekennzeichnet:**
- **dass** die erste und die zweite Pipeline-Stufe jeweils einen ersten Sektor (ST11, ST21) und einen zweiten Sektor (ST12, ST22) umfassen, wobei der erste Sektor jeder Stufe während eines ersten Taktgeberhalbzyklus (H1) aktiv ist und der zweite Sektor während eines zweiten Taktgeberhalbzyklus (H2) aktiv ist,
- **dass** die Recheneinheit (ALU) in dem ersten Sektor (ST21) der zweiten Pipeline-Stufe (ST2) eingerichtet ist,
- **dass** die Inkrementierungsschaltung (SPC) des Programmschrittzählers in dem zweiten Sektor (ST12) der ersten Pipeline-Stufe (ST1) eingerichtet ist,
- **dass** das Adressauswahlsignal (SEL) an die Inkrementierungsschaltung (SPC) des Programmschrittzählers während des zweiten Taktgeberhalbzyklus angewandt wird.

2. Mikroprozessor (Fig. 1 MP1) nach Anspruch 1, bei dem die Mittel (PREDEC) zum Decodieren der Anweisung für den bedingten Sprung in dem ersten Sektor (ST11) der ersten Pipeline-Stufe (ST1) angeordnet sind und das Adressauswahlsignal (SEL) an die Inkrementierungsschaltung (SPC) des Programmschrittzählers über ein Register mit Verriegelung (B2) angewandt wird, das die zwei Sektoren (ST11, ST12) der ersten Pipeline-Stufe (ST1) trennt.

3. Mikroprozessor (Fig.2 MP2) nach Anspruch 1, bei dem die Mittel (DEC3) zum Decodieren der Anweisung des bedingten Sprungs in dem zweiten Sektor (ST12) der ersten Pipeline-Stufe (ST1) angeordnet sind und das Adressauswahlsignal (SEL), das von den Mitteln (DEC3) zum Decodieren der Anweisung des bedingten Sprungs geliefert wird, direkt an die Inkrementierungsschaltung (SPC) des Programmschrittzählers angelegt wird.

4. Mikroprozessor nach einem der Ansprüche 1 bis 3, bei dem:
- die Anweisung für den bedingten Sprung (JMPc) eine Anweisung für einen relativen Sprung ist,
- die Inkrementierungsmittel (SPC) des Programmschrittzählers eine Addierschaltung (ADD) umfassen, die am Eingang den aktuellen Wert des Programmschrittzählers (PC) und am Ausgang eine Multiplexerschaltung (MUX) empfängt,
- die Multiplexerschaltung (MUX) von den Mitteln (PREDEC, DEC3) zum Decodieren der Anweisung des bedingten Sprungs (JMPc) gesteuert wird und am Eingang einen normalen Inkrementierungswert (+1) des Programmschrittzählers und einen Wert für einen relativen Sprung (VAL) des Programmschrittzählers (PC), der in der Anweisung für den bedingten Sprung (JMPc) enthalten ist, erhält.

5. Mikroprozessor nach einem der Ansprüche 1 bis 3, bei dem
- die Anweisung des bedingten Sprungs (JMPc) eine Anweisung für einen absoluten Sprung ist,
- die Mittel (SPC) zum Inkrementieren des Programmschrittzählers eine Multiplexerschaltung (MUX) umfassen, die am Eingang den Ausgang einer Addierschaltung (ADD) und einen Wert (VAL) für einen absoluten Sprung des Programmschrittzählers (PC), der in der Anweisung des bedingten Sprungs (JMPc) enthalten ist, erhält,
- die Multiplexerschaltung (MUX) von den Mitteln zum Decodieren (PREDEC, DEC3) der Anweisung für den bedingten Sprung (JMPc) gesteuert wird, und
- die Addierschaltung (ADD) am Eingang den aktuellen Wert des Programmschrittzählers (PC) und einen normalen Inkrementierungswert (+1) des Programmschrittzählers erhält.

6. Mikroprozessor nach einem der Ansprüche 1 bis 5, bei dem die Mittel zum Decodieren (PREDEC, DEC3) angeordnet sind, um eine kompakte Anweisung für einen bedingten Sprung (JMPc) zu decodieren, die einen Operationscode (CODE_{JMPc}) , eine Bedingung (COND) und einen Sprungwert (VAL) umfasst.

7. Mikroprozessor nach einem der Ansprüche 1 bis 6, der eine Registerbank (REGBANK) umfasst, die beim Lesen zum ersten Sektor (ST21) und beim Schreiben zum zweiten Sektor (ST22) der zweiten Pipeline-Stufe (ST2) gehört.

8. Mikroprozessor nach Anspruch 7, bei dem die Sektoren (ST21, ST22) der zweiten Pipeline-Stufe (ST2) durch einen Pufferspeicher mit drei Zuständen (B4) begrenzt sind, der zwischen dem ersten (S1) und dem zweiten (S2) Ausgang der Recheneinheit (ALU) und der Schreibeingänge (INRd, INRf) der Registerbank (REGBANK) angeordnet ist.

## Claims

1. Pipeline microprocessor (MP1, MP2) comprising :
- a program counter (PC),
- means (DEC1, DEC2, DEC3) for decoding a play of instructions of the microprocessor,
- means (Figure 1 PREDEC, Figure 2 DEC3) for decoding a conditional jump instruction (JMPc) provided to deliver an address selection signal (SEL), arranged in a first pipeline stage (ST1) of the microprocessor and connected to a second output (S2) of an arithmetic logic unit (ALU),
- an arithmetic logic unit (ALU) arranged in a second pipeline stage (ST2) next to the first stage (ST1) comprising a first output (S1) for delivering a result and a second output (S2) for delivering status bits (C, N, P, Z) of the result,
- an incrementation circuit (SPC) for the program counter (PC), comprising means (MUX, ADD) for delivering, according to the said address selection signal (SEL), a read address for an instruction immediately following or a jump address determined by the contents (VAL) of a conditional jump instruction (JMPc),
**characterised in that** :
- the first and second pipeline stages each comprise a first sector (ST11, ST21) and a second sector (ST12, ST22), the first sector of each stage being active during a first half-clock cycle (H1) and the second sector being active during a second half-clock cycle (H2),
- the arithmetic logic unit (ALU) is arranged in the first sector (ST21) of the second pipeline stage (ST2),
- the incrementation circuit (SPC) of the program counter is arranged in the second sector (ST12) of the first pipeline stage (ST1),
- the address selection signal (SEL) is applied to the incrementation circuit (SPC) of the program counter during the second half-clock cycle.

2. Microprocessor (Figure 1 MP1) according to claim 1, in which the means (PREDEC) for decoding the conditional jump instruction are arranged in the first sector (ST11) of the first pipeline stage (ST1), and the address selection signal (SEL) is applied to the incrementation circuit (SPC) of the program counter by means of an interlocking register (B2) separating the two sectors (ST11, ST12) of the first pipeline stage (ST1).

3. Microprocessor (Figure 2 MP2) according to claim 1, in which the means (DEC3) for decoding the conditional jump instruction are arranged in the second sector (ST12) of the first pipeline stage (ST1), and the address selection signal (SEL) delivered by the means (DEC3) for decoding the conditional jump instruction is applied directly to the incrementation circuit (SPC) of the program counter.

4. Microprocessor according to one of claims 1 to 3, in which:
- the conditional jump instruction (JMPc) is a relative jump instruction,
- the incrementation means (SPC) of the program counter comprise an adding network (ADD) receiving at input the current value of the program counter (PC) and the output of a multiplexer circuit (MUX),
- the multiplexer circuit (MUX) is controlled by means (PREDEC, DEC3) for decoding the conditional jump instruction (JMPc) and receives at input a normal incrementation value (+1 ) from the program counter and a relative jump value (VAL) from the program counter (PC), contained in the conditional jump instruction (JMPc).

5. Microprocessor according to one of claims 1 to 3, in which:
- the conditional jump instruction (JMPc) is an absolute jump instruction,
- the incrementation means (SPC) of the program counter comprise a multiplexer circuit (MUX) receiving at input the output of an adding network (ADD) and an absolute jump value (VAL) from the program counter (PC) contained in the conditional jump instruction (JMPc),
- the multiplexer circuit (MUX) is controlled by the means (PREDEC, DEC3) for decoding the conditional jump instruction (JMPc), and
- the adding network (ADD) receives at input the current value of the program counter (PC) and a normal incrementation value (+1) of the program counter.

6. Microprocessor according to one of claims 1 to 5, in which the decoding means (PREDEC, DEC3) are arranged to decode a high-density conditional jump instruction (JMPc) comprising an operating code (CODE_{JMPc}), a jump condition (COND) and a jump value (VAL).

7. Microprocessor according to one of claims 1 to 6, comprising a register bank (REGBANK) which belongs, at reading, to the first sector (ST1) and, at writing, to the second sector (ST22) of the second pipeline stage (ST2).

8. Microprocessor according to claim 7, in which the sectors (ST21 ST22) of the second pipeline stage (ST2) are defined by a tristate buffer (B4) arranged between the first (S1) and second (S2) outputs of the arithmetic logic unit (ALU) and the write inputs (INRd, INRf) of the register bank (REGBANK).
